# EUROPEAN PATENT SPECIFICATION

(11) **EP 1 966 950 B1**
(45) Date of publication and mention of the grant of the patent: **22.12.2010**
(21) Application number: 06831497.0
(22) Date of filing: 28.12.2006
(51) Int. Cl.: H04L 29/06, H04L 12/56, G06F 9/48

(54) **PROCESSING RECEIVED DATA**
VERARBEITUNG EMPFANGENER DATEN
TRAITEMENT DES DONNEES REÇUES

(30) Priority: 28.12.2005 GB 0526519; 10.01.2006 GB 0600417; 01.02.2006 GB 0602033
(43) Date of publication of application: 10.09.2008
(60) Divisional application: 10162887.3
(73) Proprietor: Solarflare Communications, Inc., Irvine, CA 92618 (US)
(72) Inventor: POPE, Steven, Cambridges CB1 3QJ (GB); RIDDOCH, David, Cambridge CB1 2DW (GB)
(74) Representative: Slingsby, Philip Roy
(86) International application number: PCT/GB2006/004946
(87) International publication number: WO 2007/074343

(56) References cited:
- WO-A-00/30321
- GB-A- 2 372 679
- US-A1- 2004 064 668
- US-A1- 2005 226 165
- US-B1- 6 205 152
- US-B1- 6 609 151
- US-B1- 6 795 873

## Description

This invention relates to supporting virtual instances of data processing entities, particularly hardware devices.

It is normal for a computer to have just a single operating system (OS) running at any one time. That operating system provides support to one or more user-level applications running on the computer. The support provided by the operating system typically includes providing the applications with protocols whereby the applications can communicate with hardware components of the computer. Those components could include input/output (I/O) devices such as a keyboard, a display or a network interface. The protocols can be provided in the form of libraries of procedures that can be called by the applications and which, when executed, communicate with the hardware in the desired way.

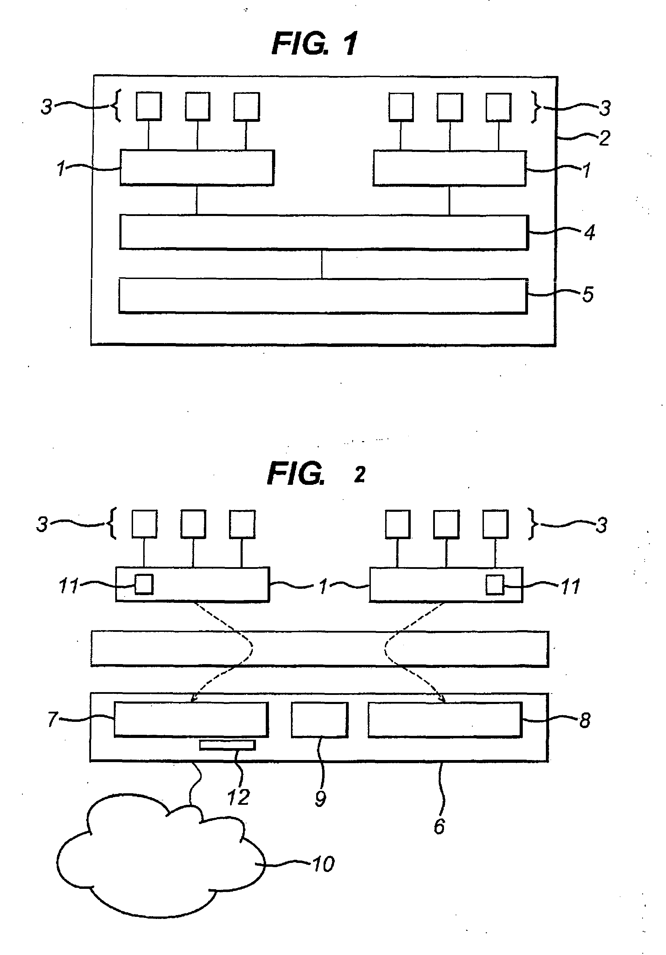

Another arrangement, which is illustrated in figure 1, involves running multiple operating systems 1 on a single computer 2. This arrangement has been implemented for example by the IBM 360 and more recently by VMware and Xen. Each operating system supports a respective set of applications 3, which communicate with their operating system in the normal way. Each operating system functions independently of the others, so a supervisory entity or hypervisor 4 is used to manage the operating systems and their interactions with the hardware 5. The hypervisor performs functions such as scheduling the operations of each operating system and ensuring that when the hardware needs to communicate with a particular one of the operating systems its messages are directed correctly. Therefore the hypervisor is itself a form of operating system.

The latter function of the hypervisor is especially significant when the hardware needs to initiate communications with an operating system or even with directly with a user-level entity such as an application. Such communications must be directed to the right one of the operating systems and/or to the right one of the applications. One example of a hardware configuration in which this could arise is the one described in WO 2004/025477. In that configuration the network interface hardware can pass data that has been received over the network to a buffer at its own initiation, rather than having to wait for the operating system or the application to request any received data. The buffer can be owned by the operating system or the application, so the operating system or the application can access the data stored in the buffer.

Figure 2 illustrates the manner in which network hardware is conventionally configured for operation in a system running multiple operating systems. In figure 2 like components have the same reference numbers as in figure 1. In the arrangement of figure 2 the network hardware 6 implements two virtual network interfaces 7 and 8. Each of those virtual interfaces is operated by common hardware components of the network hardware 6, but each has its own state which is stored in a respective region of state memory 9 of the hardware. Included in the state of each virtual network interface is its MAC (medium access control) address, which it uses in the network 10 to which the interface is connected. Each virtual interface has a different MAC address. This allows the network hardware to identify which of the virtual interfaces an incoming packet should be directed to, by means of the MAC address specified in an incoming data packet. For this purpose a filter 12 is implemented in the network hardware. When an incoming packet arrives the filter 12 checks its content, identifies the destination MAC address that it specifies and directs it to the appropriate virtual network interface based on that MAC address. Each operating system 1 has its own instance of a driver 11 for communicating with the respective virtual interface.

WO 2004/025477 describes a network interface that, when implemented on a platform that that has a single operating system and one or more applications, can advantageously deliver data received over the network directly to a buffer owned by the operating system or the application. There may be multiple buffers that are capable of receiving the data: the operating system could have one or more buffers for receiving the data, as could the or each application. In a typical configuration there could be one buffer allocated for each communication path or channel that is in use. The network card is therefore expected to direct received data to the appropriate one of those buffers. This can be done by the NIC using a look-up table that is pre-configured to store the address of each buffer and the port number associated with that buffer The NIC can store the virtual interface associated with the host::port information. The data in a received TCP packet contains the host::port information which when looked up determines the virtual interface to which data should be directed. Each virtual interface is associated with a set of buffers and according to information from the recipient application or operating system the NIC is able to determine which of the buffers it should next deliver data into. The network card can then look up the appropriate buffer when data is received on a particular port. Data received on other ports (for example a request from a remote terminal to establish a connection to the local machine) can be sent to a default virtual interface, which is normally associated with the operating system kernel. The kernel can then decide how to handle that data.

When the system described in WO 2004/025477 is implemented on a platform that has multiple operating systems the approach described above cannot be readily implemented. The look-up table does not take account of the MAC address to which data has been directed, so it cannot distinguish between data sent on the same port but to different operating systems or to applications supported by different operating systems. Therefore, the efficiency advantages that stem from filtering and directing incoming data at the network hardware cannot be achieved in that scenario.

There is therefore a need for an improved way of arranging an interface to receive and direct incoming data.

According to one aspect of the present invention there is provided a computer system comprising: hardware including a data interface for interfacing between the computer system and a data source; a memory; a first operating system capable of communicating with the hardware; and a second operating system capable of supporting a user-level application and being configured to communicate with the hardware via the first operating system, the second operating system being capable of allocating a region of the memory for use as a buffer by such a user-level application; wherein the data interface is configurable to associate a predetermined data format with a region of the memory that has been allocated for use as a buffer by a user-level application supported by the second operating system so as to, on subsequently receiving from the data source a data message of that format, automatically store data of that message in that region of the memory without it passing via the first or second operating systems.

According to a second aspect of the present invention there is provided a method for operating a computer system comprising hardware including a data interface for interfacing between the computer system and a data source, a memory, a first operating system capable of communicating with the hardware; and a second operating system capable of supporting a user-level application and being configured to communicate with the hardware via the first operating system, the second operating system being capable of allocating a region of the memory for use as a buffer by such a user-level application; the method comprising: configuring the data interface to associate a predetermined data format with a region of the memory that has been allocated for use as a buffer by a user-level application supported by the second operating system; and the data interface on subsequently receiving from the data source a data message of that format, automatically storing data of that message in that region of the memory without it passing via the first or second operating systems.

Preferably the first operating system is capable of serving as an interface between multiple further operating systems and the hardware.

Preferably the first operating system is a hypervisor. Preferably the second operating system is an operating system that provides direct application support, such as Windows or Linux.

The data interface may be a network interface. The data source may be a data network.

Preferably the data interface has access to a data store for storing a plurality of indications of respective data formats and corresponding to each one an indication of a destination, and the data interface is arranged to, on receiving a data message from the data source identify whether the format of the data message matches a data format an indication of which is stored in the data store, and if it does to pass data of that message to that destination.

Preferably the data format is at least partially defined by a destination address. Preferably the address is an internet layer address. Preferably the address is an IP (internet protocol) address.

Preferably the data format is at least partially defined by a data port, such as a TCP port.

Preferably the data message is a data packet.

Preferably the data interface is configurable automatically by the first operating system to associate the predetermined data format with the region of the memory that has been allocated for use as a buffer by a user-level application supported by the second operating system.

Preferably the data interface is configurable automatically by the second operating system to associate the predetermined data format with the region of the memory that has been allocated for use as a buffer by a user-level application supported by the second operating system.

Preferably the data interface is arranged to, on receiving a data message from the data source identify whether it is configured to associate the format of that message with a region of the memory and if it has to automatically store data of that message in that region of the memory without it passing via the first or second operating systems.

Preferably one of the first operating system, the second operating system and the data interface is arranged to deconfigure the data interface from associating a message format with a region of the memory when a pre-set time has elapsed from when the interface was configured to associate that message format with that region of the memory.

Preferably one of the first operating system, the second operating system and the data interface is arranged to deconfigure the data interface from associating a message format with a region of the memory in response to sensing that data traffic conditions match one or more predefined criteria. The said traffic criteria may include the criterion that the flow of received data of the message format is below a pre-set amount in a pre-set time.

Preferably the second operating system is arranged to perform the step of configuring the data interface to direct data of subsequent data messages having a data format in common with the first data message only when it detects that the flow of received data of that data format is above a pre-set amount in a pre-set time.

Preferably the second operating system is arranged to perform the step of configuring the data interface to direct data of subsequent data messages having a data format in common with the first data message only for data formats of one or more pre-set types.

The said pre-set types may each be defined by respective port numbers or ranges of port numbers.

The present invention will now be described by way of example with reference to the accompanying drawings. In the drawings:
figure 1 shows the architecture of a computer system supporting multiple operating systems;
figure 2 shows the configuration of a network interface for operation in the system of figure 1;
figure 3 shows the architecture of a computer system supporting multiple operating systems; and
figures 4 to 6 show communication flows in the system of figure 3.

In the system to be described below, the network interface is capable of directing received data to a particular receive buffer in dependence on destination information (e.g. MAC address) to which that data has been transmitted. Furthermore, the system is arranged to automatically configure the network interface to direct the data in that way. In a platform that has multiple operating systems managed by a hypervisor, the hypervisor may be arranged to automatically configure the network interface. If the system is para-virtualised then an operating system or a part of it may be arranged to automatically configure the network interface.

NICs conventionally do not support directing incoming traffic to a particular consumer of data based on destination MAC addresses since that is not normally required in a single-operating-system environment. The following description sets out a method by which such NICs can be configured to efficiently support multiple-operating-system environments, and also a method by which enhanced NICs that do support filtering of incoming data based on destination MAC addresses can be configured.

The present example will be described with reference to a network that uses TCP/IP over Ethernet. However, the present invention is not limited to use with these and is applicable to networks that use other protocols.

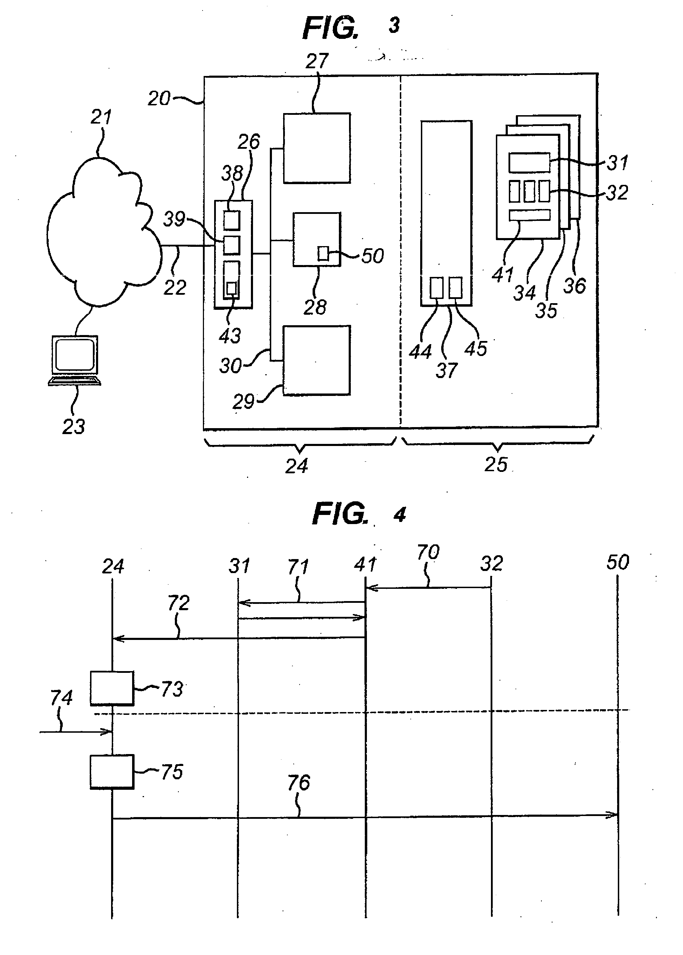

Figure 3 shows a data processing device 20 connected to a network 21 by a data link 22. A further data processor 23 is also connected to the network and can communicate with the data processor 20 over the network. Figure 3 illustrates the components of data processor 20 in the hardware domain (24) and the software domain (25). In the hardware domain it comprises a network interface 26, a central processor 27 (e.g. a CPU), a working memory 28 (e.g. RAM) and a program store 29 (e.g. a hard disc). These are interconnected by a bus 30. In the software domain it comprises an operating system 31 and applications 32. These are provided by the execution by processor 27 of suitable program code stored in the program store 29. The operating system supports the applications by, for example, managing the applications' access to hardware components of the system. For this purpose, the operating system includes a set of drivers 33 for communication with the network interface 26.

The data processor 20 could be a general-purpose computer.

The operating system 31 and applications 32 are in a first environment 34. In the system illustrated in figure 3 multiple such environments are supported, as illustrated at 35 and 36. Each environment has a respective operating system that operates independently of the other operating systems and its own user-level application(s) that operate independently of applications in others of the environments. The operation of the environments is managed by hypervisor 37. The basic functions of the hypervisor could be analogous to those employed in known multi-operating-system arrangements such as IBM 360 or VMware or Xen. The hypervisor interfaces between the operating systems and the hardware so as to allow each operating system to function correctly without conflicting with the other operating systems on the hardware platform 20.

The network interface 26 may be termed a network interface card (NIC). However, it need not take the form of a card. It could be a stand-alone external device or it could be integrated on to a motherboard of the data processor 20 or even integrated into an integrated circuit on which the processor 27 is implemented. The network interface card comprises a processor 38, a program store 39 and a working memory 40. The processor 38 executes code stored in the store 39 to perform networking functions, and uses the memory 40 as a temporary store for incoming or outgoing data, and to store working data such as look-up tables that are configured during operation.

The network interface 26 is capable of automatically delivering received data directly to buffers owned by an intended recipient of the data, for instance to a user-level buffer. The network interface could perform protocol proceeding on received data before storing it in the appropriate buffer. However, it is preferred that protocol processing is performed by the operating system 31 and/or at user level by transport library 41 after the network interface has delivered the data to the appropriate buffer.

The operating system 31, a user-level transport library 41 and the network interface 26 itself can cooperate to configure a table 43 in the network interface so as to cause the network interface to deliver data to a recipient's buffer in a single-operating-system environment. To this end the transport library 41 provides a routine that can be called by any application 32 that wishes to receive data. The process of configuration of table 43 and its use for receiving data in a single-operating system environment are illustrated in figure 4. When an application calls the routine in the transport library (step 70) the transport library arranges with the operating system for the allocation of one or more buffers 42 in memory 28 in which received data can be stored (step 71), and transmits a message to the network interface 26 to inform it of the location of the buffer(s) and the TCP port number that will be associated with the buffer(s) (step 72). The TCP port number and/or other address bits of an incoming packet will allow the network interface to identify incoming traffic that is to be directed to the buffer(s). Where more than one contiguous memory buffer is allocated to the application those buffers they form a pool that can be used for receiving incoming data. In the present description data will for simplicity be described as being delivered to a buffer, but in practice it could be delivered to a discontinuous region of memory formed by a pool of buffers, all of which are owned by a particular destination application as a virtual interface. The network interface is informed of the address of the default virtual interface when the system is first configured. The network interface is arranged to, on subsequently receiving such a message, configure a look-up filter table 43 in memory 40 to hold the location of the buffer and the parameters (step 73). In practice the filter table 43 could be split into a first table that maps patterns of address bits to virtual interfaces and a second table that maps virtual interfaces to the physical addresses of the buffers that they are associated with and ownership information indicating which virtual interface has the right to deliver data onto that buffer.. When incoming data is received from the network (step 74) the network interface checks its characteristics against the parameters stored in filter table 43 (step 75). If the data matches a set of stored parameters the network interface directs that data to the buffer 50 whose location is stored in association with those parameters (step 76). The network interface is also arranged to direct incoming data that does not match any of the parameters stored in the table to a default location, which is conveniently the operating system in order that the operating system can process that data.

The network interface is capable of operating so as to support multiple MAC addresses, and in a multi-operating-system environment as illustrated in figure 3 it operates under the control of the hypervisor to use a different MAC address for communications to or from each operating system. When one of the operating systems begins to request network services the hypervisor allocates a MAC address to that operating system, stores in a table 44 the pairing of that MAC address with that operating system, and instructs the network interface to configure itself to support that additional MAC address. When data is to be transmitted from that operating system the hypervisor instructs the network interface to transmit it from the appropriate MAC address. The hypervisor may also need to instruct the NIC to operate in a "promiscuous" mode, so that it will accept data directed to multiple MAC addresses.

In its default configuration, in order that received data is directed to the appropriate location the network interface forwards received packets to the hypervisor. The hypervisor identifies the destination MAC address in each packet, looks it up in table 44 and forwards the packet to the appropriate operating system. It would be possible for the network interface to be configured to do this. However, this would require the NIC to perform filtering based on the MAC address, which is not desirable. The reason for this is that that capability is not required in a single-OS system, and additionally providing support for choosing a destination based on MAC address would require the table 43 (which is conveniently provided as a content-addressable memory or RAM based hash table) to be larger. This would be expected to make it slower to look up data in the table or to take up excessive amounts of memory on the NIC. Since all incoming traffic is filtered against the filter table 43 it is desirable to keep operation of the table as simple and quick as possible.

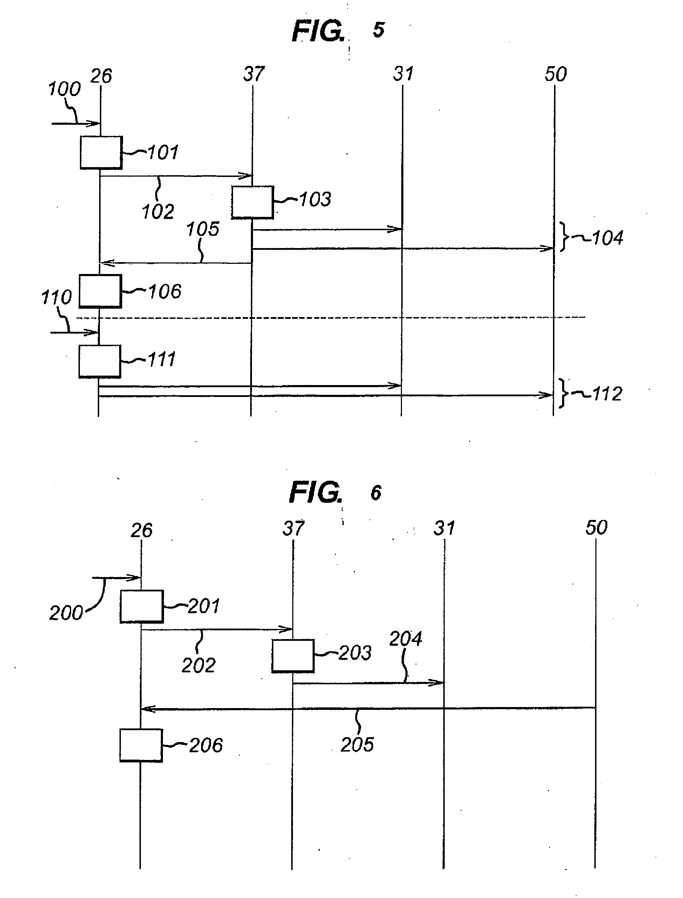

The present system therefore provides other mechanisms for configuring the table 43 in a system such as that of figure 3 that has multiple operating systems running side-by-side. These mechanisms are illustrated in figures 5 and 6. In the present system, the network interface can be configured by these mechanisms to direct data directly to the appropriate receive buffer, without the intervention of the hypervisor to route each item of incoming data. This can provide a significant improvement in efficiency, since the amount of processing that the hypervisor is required to perform is significantly reduced.

When the system is fully virtualised the operating systems and the applications are unaware that they are running in a multi-OS environment. In this situation the mechanism of figure 5 can be used. In a para-virtualised environment either mechanism can be used.

When an application wishes to be able to receive data it calls the routine in the transport library in the same way as if it were in a single-OS system. The transport library obtains a buffer for the data to be received and signals the hypervisor with the details of the connection (including buffer location and port number) in the way that it would normally signal the network interface in a single-OS system. The hypervisor then stores the filtering parameters (e.g. port number) against the address of the appropriate buffer in a table 45 that is specific to that operating system. The tables 44 and 45 could be integrated with each other. Table 45 may also indicate other locations to which data could be delivered. For example it could indicate a default location for each environment, which could conveniently be the operating system of that environment.

Figure 5 shows the signalling in one configuration mechanism. In this mechanism the hypervisor is arranged to configure the NIC's filter table 43 when it has to forward received network data to an operating system. Once the table has been appropriately configured, any further data of the same nature can be forwarded by the network interface without the intervention of the hypervisor.

Figure 5 shows signalling between the network interface 26, the hypervisor 37, an operating system 31 supported by the hypervisor and the buffer 50 of an application running on that operating system. At step 100 a TCP/IP data packet is received by the network interface. The network interface checks whether that packet matches any of the rows in filter table 43 (step 101), and since it does not it forwards the packet to the hypervisor. (Step 102). The hypervisor analyses the packet to identify its destination MAC address and looks that address up in table 44 to identify which of the operating systems it is supporting has been allocated that MAC address. It then looks up in the appropriate one of the tables 45 to identify which destination corresponds to the destination port of the received packet (step 103), and it forwards the packet to that destination (step 104). The destination could be the operating system 31 or a buffer 50. The hypervisor is configured so as to then automatically send a configuration message to the NIC (step 105) to cause the NIC to configure its table 43 so that future packets having the same destination IP address and port as that previously received packet will be forwarded directly by the NIC to that buffer. In response to that message the NIC configures table 43 accordingly (step 106). This will avoid the need for such packets to be handled by the hypervisor, reducing load on the system.

When such a packet is subsequently received (step 110) the NIC checks its details against the filter table 43, finds a match and retrieves the destination stored in the table (step 111) and then automatically forwards the packet to that destination. This subsequent operation bypasses the hypervisor.

The hypervisor may automatically configure the table 43 in this way in response to the need to forward any received packets to a destination. Alternatively, in some situations it may be preferable for it to configure the table only after it has received a predetermined amount of data (e.g. a certain number of incoming packets) to a particular IP address or to a particular combination of IP address and port number.

This first configuration mechanism is transparent to the operating systems and the applications.

The second configuration mechanism can be used if the system is a para-virtualised system: that is one in which entities in one of the environments 34 to 36 can have knowledge of the fact that they are running in a multiple-OS system. In this mechanism the table 43 of the NIC can be configured by one of the operating systems or by an application running on that operating system.

Figure 6 shows signalling in the second mechanism. At step 200 a TCP/IP data packet is received by the network interface. The network interface fails to match the packet in table 43 (step 201) and forwards it to the hypervisor. (Step 202). The hypervisor analyses the packet to identify its destination MAC address and looks that address up in table 44 to identify which of the operating systems it is supporting has been allocated that MAC address. (Step 202). It then looks up in the tables 44, 45 to identify where to direct the received packet. (Step 203). In this example the table 45 indicates that the packet is to be sent to operating system 31. The hypervisor forwards the packet to that operating system. (Step 204). The operating system processes the packet, for example by storing it so it is accessible by an application or by protocol-processing it. The operating system also sends a configuration message to the NIC (step 205) to cause the NIC to configure its table 43 so that future packets having the same destination IP address and port as that packet will be forwarded directly by the NIC to that operating system or to the appropriate buffer. In response to that message the NIC configures table 43 accordingly (step 206). This will avoid the need for such packets to be handled by the hypervisor, reducing load on the system. Subsequent operation is as in steps 110 to 112 of figure 5. In this configuration the transport library is unused.

The operating system 31 may automatically configure the table 43 in this way in response to detecting certain pre-programmed traffic flow conditions. These may include traffic flows greater than a set volume in a set period of time to a particular port. It may advantageously monitor particular port numbers that are known to be used by high-performance applications. Which ports those are will depend on the use to which the host computer is being put. In this way the operating system can arrange for all packets to a particular high-priority application, such as a database application, to be accelerated. Alternatively, in some situations it may be preferable for it to configure the table only after it has received a predetermined amount of data (e.g. a certain number of incoming packets) to a particular IP address or to a particular combination of IP address and port number. It may then automatically deconfigure the table to delete a particular stored combination of data format and buffer address. It may do so in response to detecting conditions such as that the combination has been in place for a pre-set time, or that less data than a set threshold (of data volume or number of packets) has been received in a pre-set time. That threshold may be very low, so that the deconfiguration takes place only if no data of the respective type has been received in a certain time.

Entries in the table 43 may be deleted automatically after a pre-set period of time. This can help to avoid the table 43 growing too large and to take account of the possibility of the destination buffers or IP addresses changing. The hypervisor and/or the operating systems could be configured to signal the NIC to delete entries in the table 43 when they become out-of-date.

The multiple operating systems could be multiple instances of a single type of operating system or they could each be different operating systems.

In the data is preferably received as packets and forwarded in the same packetised form. However, the traffic data could be extracted from received packets by the NIC and forwarded to the hypervisor or elsewhere together with a representation of the routing data (e.g. IP address and port) that is needed for identifying the destination of data. This could involve partial or full protocol processing being performed by the NIC.

The data could be conveyed over the network by a protocol other than TCP/IP over Ethernet. Any suitable networking protocol can be used. Instead of MAC addresses, IP addresses and ports analogous identifiers at similar levels of the protocol that is in use can be employed for identifying the required destination of received data.

The functions performed by the hypervisor or the operating system in the mechanisms illustrated in figures 5 and 6 could be performed by the core (kernel) of the hypervisor or the operating system or by a driver of the hypervisor or operating system that allows it to communicate with the NIC.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A computer system comprising:
hardware including a data interface for interfacing between the computer system and a data source;
a memory;
a first operating system capable of communicating with the hardware; and
a second operating system capable of supporting a user-level application and being configured to communicate with the hardware via the first operating system, the second operating system being capable of allocating a region of the memory for use as a buffer by such a user-level application;
wherein the data interface is configurable to associate a predetermined data format with a region of the memory that has been allocated for use as a buffer by a user-level application supported by the second operating system so as to, on subsequently receiving from the data source a data message of that format, automatically store data of that message in that region of the memory without it passing via the first or second operating systems.

2. A computer system as claimed in claim 1, wherein the first operating system is capable of serving as an interface between multiple further operating systems and the hardware.

3. A computer system as claimed in claim 2, wherein the first operating system is a hypervisor.

4. A computer system as claimed in any preceding claim, wherein the data interface is a network interface and the data source is a data network.

5. A computer system as claimed in any preceding claim, wherein the data interface has access to a data store for storing a plurality of indications of respective data formats and corresponding to each one an indication of a destination, and the data interface is arranged to, on receiving a data message from the data source identify whether the format of the data message matches a data format an indication of which is stored in the data store, and if it does to pass data of that message to that destination.

6. A computer system as claimed in any preceding claim, wherein the data format is at least partially defined by a destination address.

7. A computer system as claimed in claim 6, wherein the address is an internet layer address.

8. A computer system as claimed in claim 7, wherein the address is an IP (internet protocol) address.

9. A computer system as claimed in any preceding claim, wherein the data format is at least partially defined by a data port.

10. A computer system as claimed in ant preceding claim, wherein the data message is a data packet.

11. A computer system as claimed in any preceding claim, wherein the data interface is configurable automatically by the first operating system to associate the predetermined data format with the region of the memory that has been allocated for use as a buffer by a user-level application supported by the second operating system.

12. A computer system as claimed in any preceding claim, wherein the data interface is configurable automatically by the second operating system to associate the predetermined data format with the region of the memory that has been allocated for use as a buffer by a user-level application supported by the second operating system.

13. A computer system as claimed in any preceding claim, wherein the data interface is arranged to, on receiving a data message from the data source identify whether it is configured to associate the format of that message with a region of the memory and if it has to automatically store data of that message in that region of the memory without it passing via the first or second operating systems.

14. A computer system as claimed in any preceding claim, wherein one of the first operating system, the second operating system and the data interface is arranged to deconfigure the data interface from associating a message format with a region of the memory when a pre-set time has elapsed from when the interface was configured to associate that message format with that region of the memory.

15. A computer system as claimed in any preceding claim, wherein one of the first operating system, the second operating system and the data interface is arranged to deconfigure the data interface from associating a data format with a region of the memory in response to sensing that data traffic conditions match one or more predefined criteria.

16. A computer system as claimed in claim 15, wherein the said traffic criteria include the criterion that the flow of received data of the data format is below a pre-set amount in a pre-set time.

17. A computer system
as claimed in any preceding claims, wherein at least one of the first and second operating systems is arranged to detect that data of a first data message received by the data interface from the data source has been directed to a destination via the first operating system, and subsequently configure the data interface to direct data of subsequent data messages having a data format in common with the first data message to that destination without it passing via the second operating system.

18. A computer system as claimed in claim 17, wherein the first operating system is capable of serving as an interface between multiple further operating systems and the hardware.

19. A computer system as claimed in claim 18, wherein the first operating system is a hypervisor.

20. A computer system as claimed in any of claims 17 to 19, wherein the data interface is a network interface and the data source is a data network.

21. A computer system as claimed in any of claims 17 to 20, wherein the data interface has access to a data store for storing a plurality of indications of respective data formats and corresponding to each one of an indication of a destination, and the data interface is arranged to, on receiving a data message from the data source indentify whether the format of the data message matches a data format an indication of which is stored in the data store, and if it does to pass data of that message to that destination.

22. A computer system as claimed in any of claims 17-21, wherein the data format is at least partially defined by a destination address.

23. A computer system as claimed in claim 22, wherein the address is an internet layer address.

24. A computer system as claimed in claim 23, wherein the address is an IP (internet protocol) address.

25. A computer system as claimed in any preceding claim, wherein the data format is at least partially defined by a data port.

26. A computer system as claimed in any preceding claim, wherein the adta message is a data packet.

27. A computer system as claimed in any of claims 17 to 26, wherein the data interface is arranged to, on receiving a data message from the data source identify whether it is configured to associate the format of that message with a region of the memory and if it has to automatically store data of that message in that region of the memory without it passing via the first of second operating systems.

28. A computer system as claimed in any of claims 17 to 27, wherein one of the first operating system, the second operating system and the data interface in arranged to deconfigure the data interface from associating a message format with a region of the memory when a pre-set time has elapsed from when the interface was configured to associate that message format with that region of the memory.

29. A computer system as claimed in any of claims 17 to 28, wherein one of the first operating system, the second operating system and the data interface is arranged to deconfigure the data interface from associating a data format with a region of the memory in response to sensing that the data traffic conditions match one or more predefined criteria.

30. A computer system as claimed in claim 29, wherein the said traffic criteria include the criterion that the flow of received data of the data format is below a pre-set amount in a pre-set time.

31. A computer system as claimed in any of claims 17 to 30, wherein the second operating system is arranged to perform the step of configuring the data interface to direct data of subsequent data messages having a data format in common with the first data message only when it detects that the flow of received data of that data format is above a pre-set amount in a pre-set time.

32. A computer system as claimed in any of claims 17 to 31, wherein the second operating system is arranged to perform the step of configuring the data interface to direct data of subsequent data messages having a data format in common with the first data message only for data formats of one or more pre-set types.

33. A computer system as claimed in claim 32, wherein the said pre-set types are each defined by a respective port numbers or ranges of port numbers.

34. A data interface that is capable of operation in a computer system as claimed in any preceding claim, and is configurable to associate a predetermined data format with a region of the memory of the computer system external to the data interface that has been allocated for use as a buffer by a user-level application supported by the second operating system so as to, on subsequently receiving from the data source a data message of that format, automatically store data of that message in that region of the memory without it passing via the first or second operating systems.

35. A computer program for acting as a driver for communicating with a data interface in a computer system as claimed in any preceding claim, the computer program being such as to provide an operating system with functionality to, in response to detection in response to detection that data of a first data message received by the data interface from the data source has been directed to a destination via another operating system, configure the data interface to direct data of subsequent data messages having a data format in common with the first data message to that destination without it passing via the second operating system.

36. A method for operating a computer system comprising hardware including a data interface for interfacing between the computer system and a data source, a memory, a first operating system capable of communicating with the hardware; and a second operating system capable of supporting a user-level application and being configured to communicate with the hardware via the first operating system, the second operating system being capable of allocating a region of the memory for use as a buffer by such a user-level application;
the method comprising:
configuring the data interface to associate a predetermined data format with a region of the memory that has been allocated for use as a buffer by a user-level application supported by the second operating system; and
the data interface on subsequently receiving from the data source a data message of that format, automatically storing data of that message in that region of the memory without it passing via the first or second operating systems.

37. A method for operating a computer system according to claim 36, the method further comprising the steps of:
detecting by means of at least one of the first and second operating systems that data of a first data message received by the data interface from the data source has been directed to a destination via the first operating system; and
subsequent to the above detecting step, configuring the data interface by means if that operating system to direct data of subsequent data messages having a data format in common with the first data message to that destination without it passing via the second operating system.

## Patentansprüche

1. Computersystem, das aufweist:
Hardware, die eine Datenschnittstelle zum Bilden einer Schnittstelle zwischen dem Computersystem und einer Datenquelle beinhaltet;
einen Speicher;
ein erstes Betriebssystem, das in der Lage ist, mit der Hardware zu kommunizieren; und
ein zweites Betriebssystem, das in der Lage ist eine Anwendung auf Benutzerebene zu unterstützen und das dazu ausgebildet ist, über das erste Betriebssystem mit der Hardware zu kommunizieren, wobei das zweite Betriebssystem in der Lage ist, einen Bereich des Speichers zu allokieren zur Verwendung als Pufferspeicher durch eine solche Anwendung auf Benutzerebene;
wobei die Datenschnittstelle konfigurierbar ist, um ein vorgegebenes Datenformat mit einem Bereich des Speichers zu assoziieren, der zur Verwendung als Pufferspeicher durch eine von dem zweiten Betriebssystem unterstützte Anwendung auf Benutzerebene allokiert worden ist, um so, beim nachfolgenden Empfang einer Datennachricht dieses Formats von der Datenquelle, Daten dieser Nachricht automatisch in diesem Bereich des Speichers zu speichern, ohne dass diese über das erste oder zweite Betriebssystem übergeben werden.

2. Computersystem wie in Anspruch 1 beansprucht, wobei das erste Betriebssystem in der Lage ist als eine Schnittstelle zwischen vielfachen weiteren Betriebssystemen und der Hardware zu dienen.

3. Computersystem wie in Anspruch 2 beansprucht, wobei das erste Betriebssystem ein Hypervisor ist.

4. Computersystem wie in einem der vorherigen Ansprüche beansprucht, wobei die Datenschnittstelle eine Netzwerkschnittstelle ist und die Datenquelle ein Datennetzwerk ist.

5. Computersystem wie in einem der vorherigen Ansprüche beansprucht, wobei die Datenschnittstelle Zugriff auf einen Datenspeicher zum Speichern einer Vielzahl von Angaben für entsprechende Datenformate und zugehörig zu jedem eine Angabe für ein Ziel aufweist, und die Datenschnittstelle angeordnet ist, beim Empfang einer Datennachricht von der Datenquelle festzustellen, ob das Format der Datennachricht mit einem Datenformat übereinstimmt, von dem eine Angabe in dem Datenspeicher gespeichert ist, und wenn dies der Fall ist, Daten dieser Nachricht an dieses Ziel zu übergeben.

6. Computersystem wie in einem der vorherigen Ansprüche beansprucht, wobei das Datenformat zumindest teilweise durch eine Zieladresse definiert ist.

7. Computersystem wie in Anspruch 6 beansprucht, wobei die Adresse eine Internet-Layer-Adresse ist.

8. Computersystem wie in Anspruch 7 beansprucht, wobei die Adresse eine IP (Internet Protocol) Adresse ist.

9. Computersystem wie in einem der vorherigen Ansprüche beansprucht, wobei das Datenformat zumindest teilweise durch einen Datenport definiert ist.

10. Computersystem wie in einem der vorherigen Ansprüche beansprucht, wobei die Datennachricht ein Datenpaket ist.

11. Computersystem wie in einem der vorherigen Ansprüche beansprucht, wobei die Datenschnittstelle durch das erste Betriebssystem automatisch ausbildbar ist, das vorgegebene Datenformat mit dem Bereich des Speichers zu assoziieren, der zur Verwendung als ein Pufferspeicher durch eine durch das zweite Betriebssystem unterstützte Anwendung auf Benutzerebene zugeordnet worden ist.

12. Computersystem wie in einem der vorherigen Ansprüche beansprucht, wobei die Datenschnittstelle durch das zweite Betriebssystem automatisch ausbildbar ist, das vorgegebene Datenformat mit dem Bereich des Speichers zu assoziieren, der zur Verwendung als ein Pufferspeicher durch eine durch das zweite Betriebssystem unterstützte Anwendung auf Benutzerebene zugeordnet worden ist.

13. Computersystem wie in einem der vorherigen Ansprüche beansprucht, wobei die Datenschnittstelle angeordnet ist, beim Empfang einer Datennachricht von der Datenquelle festzustellen, ob sie ausgebildet ist das Format dieser Nachricht mit einem Bereich des Speichers zu assoziieren und ob sie automatisch Daten dieser Nachricht in diesem Bereich des Speichers speichern muss, ohne dass sie über das erste oder zweite Betriebssystem übergeben werden.

14. Computersystem wie in einem der vorherigen Ansprüche beansprucht, wobei eines aus dem ersten Betriebssystem, dem zweiten Betriebssystem und der Datenschnittstelle angeordnet ist, die Datenschnittstelle vom Assoziieren eines Nachrichtenformats mit einem Bereich des Speichers zu dekonfigurieren, wenn eine voreingestellte Zeit seit die Schnittstelle ausgebildet wurde, dieses Nachrichtenformat mit diesem Bereich des Speichers zu assoziieren, abgelaufen ist.

15. Computersystem wie in einem der vorherigen Ansprüche beansprucht, wobei eines aus dem ersten Betriebssystem, dem zweiten Betriebssystem und der Datenschnittstelle angeordnet ist, als Reaktion auf ein Erkennen, dass die Beschaffenheit des Datenverkehrs mit einem oder mehreren vorgegebenen Kriterien übereinstimmt, die Datenschnittstelle vom Assoziieren eines Datenformats mit einem Bereich des Speichers zu dekonfigurieren.

16. Computersystem wie in Anspruch 15 beansprucht, wobei die Datenverkehrskriterien das Kriterium enthalten, dass der Fluss empfangener Daten des Datenformats innerhalb einer vorgegebenen Zeit unterhalb eines voreingestellten Umfangs ist.

17. Computersystem wie in einem der vorherigen Ansprüche beansprucht, wobei zumindest eines der ersten und zweiten Betriebssysteme angeordnet ist zu erkennen, dass Daten einer ersten durch die Datenschnittstelle von der Datenquelle empfangenen Datennachricht über das erste Betriebssystem zu einem Ziel geleitet worden sind, und nachfolgend die Datenschnittstelle auszubilden, Daten von nachfolgenden Datennachrichten, die ein Datenformat gemein mit der ersten Datennachricht aufweisen, zu diesem Ziel zu leiten, ohne sie über das zweite Betriebssystem zu übergeben.

18. Computersystem wie in Anspruch 17 beansprucht, wobei das erste Betriebssystem in der Lage ist als eine Schnittstelle zwischen vielfachen weiteren Betriebssystemen und der Hardware zu dienen.

19. Computersystem wie in Anspruch 18 beansprucht, wobei das erste Betriebssystem ein Hypervisor ist.

20. Computersystem wie in einem der Ansprüche 17 bis 19 beansprucht, wobei die Datenschnittstelle eine Netzwerkschnittstelle ist und die Datenquelle ein Datennetzwerk ist.

21. Computersystem wie in einem der Ansprüche 17 bis 20 beansprucht, wobei die Datenschnittstelle Zugriff auf einen Datenspeicher zum Speichern einer Vielzahl von Angaben entsprechender Datenformate und zugehörig zu jedem eine Angabe für ein Ziel aufweist, und die Datenschnittstelle angeordnet ist beim Empfang einer Datennachricht von der Datenquelle festzustellen, ob das Format der Datennachricht mit einem Datenformat übereinstimmt, von dem eine Angabe in dem Datenspeicher gespeichert ist, und wenn dies der Fall ist, Daten dieser Nachricht an dieses Ziel zu übergeben.

22. Computersystem wie in einem der Ansprüche 17 bis 21 beansprucht, wobei das Datenformat zumindest teilweise durch eine Zieladresse definiert ist.

23. Computersystem wie in Anspruch 22 beansprucht, wobei die Adresse eine Internet-Layer-Adresse ist.

24. Computersystem wie in Anspruch 23 beansprucht, wobei die Adresse eine IP (Internet Protocol) Adresse ist.

25. Computersystem wie in einem der vorherigen Ansprüche beansprucht, wobei das Datenformat zumindest teilweise durch einen Datenport definiert ist.

26. Computersystem wie in einem der vorherigen Ansprüche beansprucht, wobei die Datennachricht eine Datenpaket ist.

27. Computersystem wie in einem der Ansprüche 17 bis 26 beansprucht, wobei die Datenschnittstelle angeordnet ist, beim Empfang einer Datennachricht von der Datenquelle zu erkennen, ob sie ausgebildet ist, das Format dieser Nachricht mit einem Bereich des Speichers zu assoziieren und ob sie automatisch Daten dieser Nachricht in diesem Bereich des Speichers speichern muss, ohne dass diese über das erste oder zweite Betriebssystem übergeben werden.

28. Computersystem wie in einem der Ansprüche 17 bis 27 beansprucht, wobei eines aus dem ersten Betriebssystem, dem zweiten Betriebssystem und der Datenschnittstelle angeordnet ist, die Datenschnittstelle vom Assoziieren eines Nachrichtenformats mit einem Bereich des Speichers zu dekonfigurieren, wenn eine voreingestellte Zeit seit die Schnittstelle ausgebildet wurde, dieses Nachrichtenformat mit diesem Bereich des Speichers zu assoziieren, abgelaufen ist.

29. Computersystem wie in einem der Ansprüche 17 bis 28 beansprucht, wobei eines aus dem ersten Betriebssystem, dem zweiten Betriebssystem und der Datenschnittstelle angeordnet ist, als Reaktion auf ein Erkennen, dass die Beschaffenheit des Datenverkehrs mit einem oder mehreren vorgegebenen Kriterien übereinstimmt, die Datenschnittstelle vom Assoziieren eines Datenformats mit einem Bereich des Speichers zu dekonfigurieren.

30. Computersystem wie in Anspruch 29 beansprucht, wobei die Datenverkehrskriterien das Kriterium beinhalten, dass der Fluss empfangener Daten des Datenformats innerhalb einer voreingestellten Zeit unterhalb eines voreingestellten Umfangs ist.

31. Computersystem wie in einem der Ansprüche 17 bis 30 beansprucht, wobei das zweite Betriebssystem angeordnet ist, den Schritt des Ausbildens der Datenschnittstelle um Daten von nachfolgenden Datennachrichten zu leiten, die ein Datenformat gemein mit der ersten Datennachricht aufweisen, nur durchzuführen, wenn es feststellt, dass der Fluss von empfangenen Daten dieses Datenformats innerhalb einer voreingestellten Zeit oberhalb eines voreingestellten Umfangs ist.

32. Computersystem wie in einem der Ansprüche 17 bis 31 beansprucht, wobei das zweite Betriebssystem angeordnet ist, den Schritt des Ausbildens der Datenschnittstelle, Daten von nachfolgenden Datennachrichten zu leiten, die ein Datenformat gemein mit der ersten Datennachricht aufweisen, nur für Datenformate von einer oder mehreren voreingestellten Arten durchzuführen.

33. Computersystem wie in Anspruch 32 beansprucht, wobei die voreingestellten Arten jeweils durch eine entsprechende Portnummer oder durch Bereiche von Portnummern definiert sind.

34. Datenschnittstelle, die zum Betrieb in einem Computersystem wie in einem der vorherigen Ansprüche beansprucht in der Lage ist, und ausbildbar ist, ein vorgegebenes Datenformat mit einem zu der Datenschnittstelle externen Bereich des Speichers des Computersystems zu assoziieren, der zur Verwendung als ein Pufferspeicher durch eine durch das zweite Betriebssystem unterstützte Anwendung auf Benutzerebene zugewiesen worden ist, um so beim nachfolgenden Empfangen einer Datennachricht dieses Formats von der Datenquelle automatisch Daten dieser Nachricht in diesen Bereich des Speichers zu speichern, ohne dass sie über das erste oder zweite Betriebssystem übergeben werden.

35. Computerprogramm zum Wirken als ein Treiber zum Kommunizieren mit einer Datenschnittstelle in einem Computersystem wie in einem der vorhergehenden Ansprüche beansprucht, wobei das Computerprogramm derart ist, dass es ein Betriebssystem mit Funktionalität zur Verfügung stellt, um als Reaktion auf ein Feststellen, dass durch die Datenschnittstelle von der Datenquelle empfangene Daten einer ersten Datennachricht über ein anderes Betriebssystem zu einem Ziel geleitet worden sind, die Datenschnittstelle auszubilden, Daten von nachfolgenden Datennachrichten, die ein Datenformat gemein mit der ersten Datennachricht aufweise, zu diesem Ziel zu leiten, ohne dass sie über das zweite Betriebssystem übergeben werden.

36. Verfahren zum Betreiben eines Computersystems, das eine Datenschnittstelle zum Bilden einer Schnittstelle zwischen dem Computersystem und einer Datenquelle beinhaltende Hardware, einen Speicher, ein erstes Betriebssystem, das in der Lage ist, mit der Hardware zu kommunizieren; und ein zweite Betriebssystem aufweist, das in der Lage ist, eine Anwendung auf Benutzerebene zu unterstützen, und dazu ausgebildet ist, über das erste Betriebssystem mit der Hardware zu kommunizieren, wobei das zweite Betriebssystem in der Lage ist, einen Bereich des Speichers zu allokieren zur Verwendung als einen Pufferspeicher durch eine solche Anwendung auf Benutzerebene;
wobei das Verfahren aufweist:
Konfigurieren der Datenschnittstelle, um ein vorgegebenes Datenformat mit einem Bereich des Speichers zu assoziieren, der zur Verwendung als Pufferspeicher durch eine von dem zweiten Betriebssystem unterstützte Anwendung auf Benutzerebene allokiert worden ist; und
wobei die Datenschnittstelle, beim nachfolgenden Empfangen einer Datennachricht dieses Formats von der Datenquelle, automatisch Daten dieser Nachricht in diesem Bereich des Speichers speichert, ohne dass sie über das erste oder zweite Betriebssystem übergeben werden.

37. Verfahren zum Betreiben eines Computersystems gemäß Anspruch 36, wobei das Verfahren weiterhin die Schritte aufweist:
Feststellen mittels zumindest einem der ersten und zweiten Betriebssysteme, dass durch die Datenschnittstelle von der Datenquelle empfangene Daten einer ersten Datennachricht über das erste Betriebssystem zu einem Ziel geleitet worden sind; und
nachfolgend auf den obigen Schritt des Feststellens, Ausbilden der Datenschnittstelle mittels dieses Betriebssystems, um Daten von nachfolgenden Datennachrichten, die ein Datenformat gemein mit der ersten Datennachricht aufweisen, zu diesem Ziel zu leiten, ohne dass sie über das zweite Betriebssystem übergeben werden.

## Revendications

1. Système informatique comprenant :
un matériel qui comprend une interface de données destinée à interfacer entre le système informatique et une source de données ;
une mémoire ;
un premier système d'exploitation capable de communiquer avec le matériel ; et
un deuxième système d'exploitation capable de prendre en charge une application au niveau de l'utilisateur et configuré de manière à communiquer avec le matériel par le premier système d'exploitation, le deuxième système d'exploitation étant capable d'attribuer une région de la mémoire à utiliser en tant que mémoire tampon par une telle application au niveau de l'utilisateur ;
dans lequel l'interface de données peut être configurée pour associer un format de données prédéterminé à une région de la mémoire qui a été attribuée pour être utilisée en tant que mémoire tampon par une application au niveau de l'utilisateur prise en charge par le deuxième système d'exploitation de façon à stocker automatiquement, lors de la réception ultérieure d'un message de données de ce format en provenance de la source de données, les données de ce message dans cette région de la mémoire sans passer par le premier ou du deuxième système d'exploitation.

2. Système informatique selon la revendication 1, dans lequel le premier système d'exploitation est capable de servir d'interface entre de multiples autres systèmes d'exploitation et le matériel.

3. Système informatique selon la revendication 2, dans lequel le premier système d'exploitation est un hyperviseur.

4. Système informatique selon l'une quelconque des revendications précédentes, dans lequel l'interface de données est une interface de réseau et la source de données est un réseau de données.

5. Système informatique selon l'une quelconque des revendications précédentes, dans lequel l'interface de données accède à un magasin de données destiné à stocker une pluralité d'indications de formats de données respectifs dont chacun correspond à une indication d'une destination, et l'interface de données est organisée de manière à identifier, lors de la réception d'un message de données en provenance de la source de données, si le format du message de données correspond à un format de données dont une indication est stockée dans le magasin de données, et si tel est le cas, à transmettre les données de ce message à cette destination.

6. Système informatique selon l'une quelconque des revendications précédentes, dans lequel le format de données est défini au moins en partie par une adresse de destination.

7. Système informatique selon la revendication 6, dans lequel l'adresse est une adresse de couche Internet.

8. Système informatique selon la revendication 7, dans lequel l'adresse est une adresse IP (protocole Internet).

9. Système informatique selon l'une quelconque des revendications précédentes, dans lequel le format de données est défini au moins en partie par un port de données.

10. Système informatique selon l'une quelconque des revendications précédentes, dans lequel le message de données est un paquet de données.

11. Système informatique selon l'une quelconque des revendications précédentes, dans lequel l'interface de données peut être configurée automatiquement par le premier système d'exploitation de façon à associer le format de données prédéterminé à la région de la mémoire qui a été attribuée pour être utilisée en tant que mémoire tampon par une application au niveau de l'utilisateur prise en charge par le deuxième système d'exploitation.

12. Système informatique selon l'une quelconque des revendications précédentes, dans lequel l'interface de données peut être configurée automatiquement par le deuxième système d'exploitation de façon à associer le format de données prédéterminé à la région de la mémoire qui a été attribuée pour être utilisée en tant que mémoire tampon par une application au niveau de l'utilisateur prise en charge par le deuxième système d'exploitation.

13. Système informatique selon l'une quelconque des revendications précédentes, dans lequel l'interface de données est organisée de manière à identifier, lors de la réception d'un message de données en provenance de la source de données, si elle est configurée pour associer le format de ce message à une région de la mémoire et si elle doit stocker automatiquement les données de ce message dans cette région de la mémoire sans passer par le premier ou du deuxième système d'exploitation.

14. Système informatique selon l'une quelconque des revendications précédentes, dans lequel l'un du premier système d'exploitation, du deuxième système d'exploitation et de l'interface de données, est organisé de manière à déconfigurer l'interface de données pour qu'elle n'associe plus un format de message à une région de la mémoire quand un temps préétabli s'est écoulé à partir du moment où l'interface a été configurée de manière à associer ce format de message à cette région de la mémoire.

15. Système informatique selon l'une quelconque des revendications précédentes, dans lequel l'un du premier système d'exploitation, du deuxième système d'exploitation et de l'interface de données, est organisé de manière à déconfigurer l'interface de données pour qu'elle n'associe plus un format de message à une région de la mémoire en réponse à une détection selon laquelle les conditions de trafic de données répondent à un ou plusieurs critères prédéfinis.

16. Système informatique selon la revendication 15, dans lequel lesdits critères de trafic comprennent le critère selon lequel le flux de données reçues du format de données se trouve en dessous d'une quantité préétablie dans un temps préétabli.

17. Système informatique selon l'une quelconque des revendications précédentes, dans lequel l'un au moins des premier et deuxième systèmes d'exploitation est organisé de manière à détecter que les données d'un premier message de données reçu par l'interface de données en provenance de la source de données, ont été dirigées vers une destination par le premier système d'exploitation, et à configurer par la suite l'interface de données pour diriger les messages de données ultérieurs qui présentent un format de données en commun avec le premier message de données vers cette destination sans passer par le deuxième système d'exploitation.

18. Système informatique selon la revendication 17, dans lequel le premier système d'exploitation est capable de servir d'interface entre de multiples autres systèmes d'exploitation et le matériel.

19. Système informatique selon la revendication 18, dans lequel le premier système d'exploitation est un hyperviseur.

20. Système informatique selon l'une quelconque des revendications 17 à 19, dans lequel l'interface de données est une interface de réseau et la source de données est un réseau de données.

21. Système informatique selon l'une quelconque des revendications 17 à 20, dans lequel l'interface de données accède à un magasin de données destiné à stocker une pluralité d'indications de formats de données respectifs dont chacune correspond à une indication d'une destination, et l'interface de données est organisée de manière à identifier, lors de la réception d'un message de données en provenance de la source de données, si le format du message de données correspond à un format de données dont une indication est stockée dans le magasin de données, et si tel est le cas, à transmettre les données de ce message à cette destination.

22. Système informatique selon l'une quelconque des revendications 17 à 21, dans lequel le format de données est défini au moins en partie par une adresse de destination.

23. Système informatique selon la revendication 22, dans lequel l'adresse est une adresse de couche Internet.

24. Système informatique selon la revendication 23, dans lequel l'adresse est une adresse IP (protocole Internet).

25. Système informatique selon l'une quelconque des revendications précédentes, dans lequel le format de données est défini au moins en partie par un port de données.

26. Système informatique selon l'une quelconque des revendications précédentes, dans lequel le message de données est un paquet de données.

27. Système informatique selon l'une quelconque des revendications 17 à 26, dans lequel l'interface de données est organisée de manière à identifier, lors de la réception d'un message de données en provenance de la source de données, si elle est configurée pour associer le format de ce message à une région de la mémoire et si elle doit stocker automatiquement les données de ce message dans cette région de la mémoire sans passer par le premier ou du deuxième système d'exploitation.

28. Système informatique selon l'une quelconque des revendications 17 à 27, dans lequel l'un du premier système d'exploitation, du deuxième système d'exploitation et de l'interface de données, est organisé de manière à déconfigurer l'interface de données pour qu'elle n'associe plus un format de message à une région de la mémoire quand un temps préétabli s'est écoulé à partir du moment où l'interface a été configurée de manière à associer ce format de message à cette région de la mémoire.

29. Système informatique selon l'une quelconque des revendications 17 à 28, dans lequel l'un du premier système d'exploitation, du deuxième système d'exploitation et de l'interface de données, est organisé de manière à configurer l'interface de données pour qu'elle n'associe plus un format de message à une région de la mémoire en réponse à une détection que les conditions du trafic de données répondent à un ou plusieurs critères prédéfinis.

30. Système informatique selon la revendication 29, dans lequel lesdits critères de trafic comprennent le critère selon lequel le flux de données reçues du format de données se trouve en dessous d'une quantité préétablie dans un temps préétabli.

31. Système informatique selon l'une quelconque des revendications 17 à 30, dans lequel le deuxième système d'exploitation est organisé de manière à exécuter l'étape de configuration de l'interface de données de façon à diriger les données des messages de données ultérieurs qui présentent un format de données en commun avec le premier message de données seulement s'il détecte que le flux des données reçues de ce format de données se trouve au-dessus d'une quantité préétablie dans un temps préétabli.

32. Système informatique selon l'une quelconque des revendications 17 à 31, dans lequel le deuxième système d'exploitation est organisé de manière à exécuter l'étape de configuration de l'interface de données de façon à diriger les données des messages de données ultérieurs qui présentent un format de données en commun avec le premier message de données seulement pour les formats de données d'un ou de plusieurs types préétablis.

33. Système informatique selon la revendication 32, dans lequel lesdits types préétablis sont définis chacun par des numéros de port respectifs ou des plages de numéros de ports.

34. Interface de données capable de fonctionner dans un système informatique selon l'une quelconque des revendications précédentes, et pouvant être configurée pour associer un format de données prédéterminé à une région de la mémoire du système informatique extérieure à l'interface de données qui a été attribuée pour être utilisée en tant que mémoire tampon par une application au niveau de l'utilisateur prise en charge par le deuxième système d'exploitation, de façon à stocker automatiquement, lors d'une réception ultérieure d'un message de données de ce format en provenance de la source de données, les données de ce message dans cette région de la mémoire sans passer par le premier ou du deuxième système d'exploitation.

35. Programme informatique destiné à agir en tant que gestionnaire pour communiquer avec une interface de données dans un système informatique selon l'une quelconque des revendications précédentes, le programme informatique étant destiné à fournir à un système d'exploitation une fonction consistant à configurer l'interface de données, en réponse à une détection selon laquelle les données d'un premier message de données reçu par l'interface de données en provenance de la source de données ont été dirigées vers une destination par l'intermédiaire d'un autre système d'exploitation, de manière à diriger les données des messages de données ultérieurs qui présentent un format de données en commun avec le premier message de données vers cette destination sans passer par le deuxième système d'exploitation.

36. Procédé servant à exploiter un système informatique qui comprend un matériel qui inclut une interface de données destinée à interfacer le système informatique et une source de données, une mémoire, un premier système d'exploitation capable de communiquer avec le matériel ; et un deuxième système d'exploitation capable de prendre en charge une application au niveau de l'utilisateur et configuré de manière à communiquer avec le matériel par le premier système d'exploitation, le deuxième système d'exploitation étant capable d'attribuer une région de la mémoire à utiliser en tant que mémoire tampon par une telle application au niveau de l'utilisateur ;
le procédé comportant de :
configurer de l'interface de données de manière à associer un format de données prédéterminé à une région de la mémoire qui a été attribuée pour être utilisée en tant que mémoire tampon par une application au niveau de l'utilisateur prise en charge par le deuxième système d'exploitation ; et
stocker automatiquement par l'interface de données, lors de la réception ultérieure d'un message de données de ce format en provenance de la source de données, des données de ce message dans cette région de la mémoire sans passer par l'intermédiaire des premier ou deuxième systèmes d'exploitation.

37. Procédé destiné à faire fonctionner un système informatique selon la revendication 36, le procédé comprenant en outre les étapes consistant à :
détecter, au moyen de l'un au moins des premier et deuxième systèmes d'exploitation, que les données d'un premier message de données reçu par l'interface de données en provenance de la source de données, ont été dirigées vers une destination par le premier système d'exploitation ; et
à la suite de l'étape de détection ci-dessus, configurer l'interface de données à l'aide de ce système d'exploitation de manière à diriger les données des messages de données ultérieurs qui présentent un format de données en commun avec le premier message de données vers cette destination sans passer par le deuxième système d'exploitation.
